# EUROPEAN PATENT SPECIFICATION

(11) **EP 4 395 011 B1**
(45) Date of publication and mention of the grant of the patent: **17.06.2026**
(21) Application number: 23771075.1
(22) Date of filing: 15.03.2023
(51) Int. Cl.: A62C 3/16, A62C 35/10, H01M 10/6551, H01M 10/6556, H01M 10/653, H01M 10/6567, H01M 10/613, H01M 10/42, H01M 50/213, H01M 50/342, H01M 50/375, H01M 50/383, H01M 50/30, H01M 50/224, H01M 10/6554, H01M 10/625, H01M 10/647

(54) **BATTERY MODULE**
BATTERIEMODUL
MODULE DE BATTERIE

(30) Priority: 17.03.2022 KR 20220033660
(43) Date of publication of application: 03.07.2024
(73) Proprietor: LG Energy Solution, Ltd., Seoul 07335 (KR)
(72) Inventor: JUNG, Min Yong, Daejeon 34122 (KR); CHOI, Bum, Daejeon 34122 (KR); KEUM, Jong Yoon, Daejeon 34122 (KR); AHN, Soo Jun, Daejeon 34122 (KR); CHUNG, Jae Heon, Daejeon 34122 (KR)
(74) Representative: Plasseraud IP
(86) International application number: PCT/KR2023/003435
(87) International publication number: WO 2023/177196

(56) References cited:
- WO-A1-2021/246605
- WO-A1-2022/004972
- CN-U- 212 700 167
- CN-U- 212 700 167
- JP-A- 2020 088 108
- JP-A- 2021 027 020
- KR-A- 20140 077 272
- KR-A- 20200 004 202
- KR-A- 20200 041 708
- US-A1- 2014 342 201
- US-A1- 2022 013 757

## Description

### Technical Field

The present invention relates to a battery module, and specifically, relates to a battery module capable of extinguishing flames as cooling water in a heat sink flows down into a battery cell upon inside ignition of the battery cell.

This application claims the benefit of priority based on Korean Patent Application No. 10-2022-0033660 dated March 17, 2022.

### Background Art

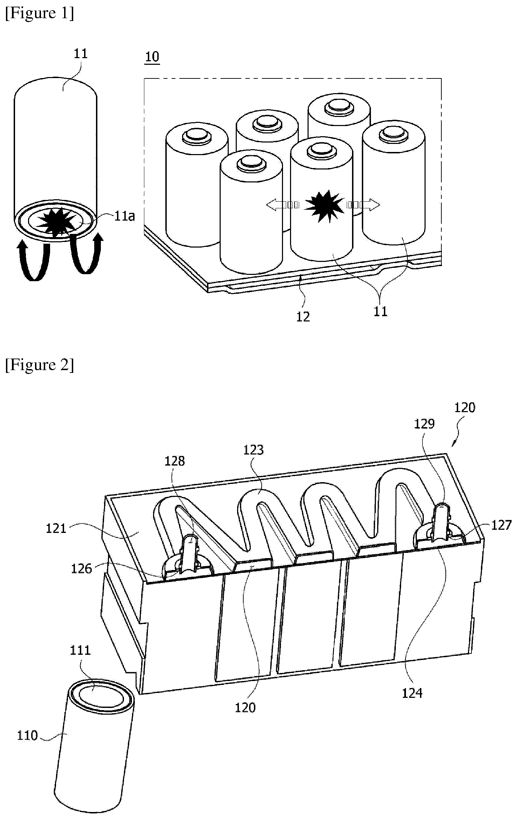

In a battery module according to the conventional art, Figure 1 is a diagram for explaining chain ignition upon ignition of a battery cell.

Referring to Figure 1, a battery module (10) may comprise a plurality of battery cells (11) and a heat sink (12) attached to the battery cells (11).

JP2021027020A discloses a heat dissipation case with a flow groove and a heat dissipation film that covers the case and its flow groove.

WO2022004972A1 discloses that cooling water can enter an ignited battery cell after a sealing member has melted.

US2022013757A1 discloses a heat dissipation case having a weakened zone through which hot gases from an ignited battery cell can melt and break through to be vented. Cooling water from the heat dissipation case can optionally flow into the battery cell once the plug has melted.

Generally, in the case of a can-type battery cell (11), a vent part (11a) formed so that when gas or the like is generated therein, the gas can be discharged is often provided. When ignition occurs inside the battery cell (11), the vent part (11a) is opened by the internal pressure of the battery cell (11), and flames are ejected to the outside of the battery cell (11).

Meanwhile, when the side of the vent part (11a) of the battery cell (11) is attached to the heat sink (12), the heat sink (12) blocks the vent part (11a) of the battery cell upon ignition occurrence inside the battery cell (11). In this case, upon ignition of the battery cell (11), the vent part (11a) does not open, and as a result, the internal pressure of the battery cell (11) continuously increases, and the flames tear the side of the battery cell (11) and are ejected to the outside.

In this way, while the flames ejected to the side of the battery cell (11) are transferred to the adjacently disposed battery cells, there is a problem of causing chain ignition.

### Disclosure

### Technical Problem

It is a problem to be solved by the present invention to provide a battery module, wherein when a battery cell is ignited to open a vent part, cooling water in a heat sink flows down to the ignited battery cell while the heat sink is damaged, thereby being capable of early extinguishing flames of battery cells.

Also, it is a problem to be solved by the present invention to provide a battery module, wherein when a vent part is opened, a heat dissipation film manufactured in the form of a thin film in micrometer units is provided to be torn.

In addition, it is a problem to be solved by the present invention to provide a battery module capable of preventing side explosion of battery cells to prevent chain ignition of battery cells.

### Technical Solution

In order to solve the above problems, according to one aspect of the present invention, a battery module comprising a plurality of battery cells having vent parts, and a heat sink disposed to face the vent parts and provided to dissipate heat from the plurality of battery cells is provided. The vent part is normally maintained in a closed state, but when an event such as a thermal runaway of the battery cell occurs, it is opened in the case that gas or a flame is generated inside the battery cell, whereby it is configured so that the gas or flame is discharged to the outside of the battery cell. The vent part may be provided by a method of forming a notch or the like in a specific portion of the battery cell case so that the relevant specific portion is ruptured when the internal pressure of the battery cell increases. The plurality of battery cells is arranged so that the respective vent parts are disposed side by side while facing the same direction. In this case, the vent part of each battery cell is arranged to face the heat sink.

The heat sink comprises a heat dissipation case having a metal material and a resinous material and having a flow path groove forming a cooling flow path through which cooling water flows, and a heat dissipation film disposed to face the vent parts and coupled to the heat dissipation case to surround the cooling flow path. Upon inside ignition of the battery cell, the heat dissipation film facing the vent part of the battery cell is torn by the pressure that opens the vent part of the battery cell, and simultaneously the cooling water flowing inside the heat sink flows down to the battery cell,

According to the invention, upon inside ignition of the battery cell, the cooling water flowing through the cooling flow path flows into the battery cell while the heat dissipation film facing the vent part is damaged.

In addition, the heat dissipation case may comprise a metal layer and a resin layer provided on one side of the metal layer.

As one example, two or more layers of the resin layer may be laminated, and the respective layers may be formed of the same or different resins.

As another example, the resin layer may comprise a first resin layer provided on one side of the metal layer and a second resin layer provided on the other side of the metal layer. At this instance, the first resin layer and the second resin layer may be formed of the same or different resin materials.

As another example, the resin layer may comprise a first resin layer provided on one side of the metal layer and a second resin layer provided on the first resin layer. At this instance, the first resin layer and the second resin layer may be formed of the same or different resin materials.

Also, the metal layer may comprise one or more selected from the group consisting of aluminum, stainless steel, and steel plate.

In addition, the heat sink may further comprise an inflow port provided on one side of the flow path groove and an outflow port on the other side of the flow path groove.

Furthermore, the inflow port and the outflow port may each have a port body with a hollow inside and a port protrusion part protruding outward from the port body. In addition, the port body may be inserted into the flow path groove, and the port protrusion part may be supported on the heat dissipation case.

Also, in the inflow port and the outflow port, the port protrusion parts may each be coupled to an outer circumferential surface of the heat dissipation case.

In addition, the heat sink may comprise a washer member disposed between the port protrusion part and the heat dissipation case.

Furthermore, the heat sink may comprise a coupling member screw-coupled to the port body inside the flow path groove and a sealing member disposed between the coupling member and the heat dissipation case inside the flow path groove.

Also, the sealing member may be arranged to contact the heat dissipation case.

In addition, the heat dissipation case may be vacuum-molded so that the flow path groove is provided.

Furthermore, the heat dissipation film may have a thickness of 10µm to 300µm.

Also, the heat dissipation case may have a thickness of 0.3mm to 20mm.

In addition, the heat dissipation film may be a film that a polymer resin film is compressed on a metal film, where the metal film may be an aluminum film, and the polymer resin film may comprise one or more selected from the group consisting of polypropylene (PP), nylon, and polyethylene terephthalate (PET)-based resins.

As one example, in the heat dissipation film, a polypropylene (PP) film may be compressed on one side of the metal film and a nylon film may be compressed on the other side of the metal film.

As another example, in the heat dissipation film, a polypropylene (PP) film may be compressed on one side of the metal film, and a nylon film and a polyethylene terephthalate film (PET) may be compressed on the other side of the metal film in a double layer form.

### Advantageous Effects

As described above, the battery module related to one example of the present invention may have the following effects.

As the heat dissipation film of the heat sink disposed to face the vent part of the battery cell is manufactured in the form of a thin film in micrometer units, the heat dissipation film is provided to be torn by the force that the internal pressure of the battery cell pushes the vent part upon inside ignition of the battery cell. As the vent part is smoothly opened while the heat dissipation film is damaged, it is possible to prevent side explosion of the battery cell, and it is possible to prevent chain ignition of the battery cell due to the side explosion of the battery cell.

Also, upon inside ignition of the battery cell, the heat dissipation film facing the vent part of the battery cell is torn by the pressure that opens the vent part of the battery cell, and simultaneously the cooling water flowing inside the heat sink flows down to the battery cell, whereby it is possible to early extinguish the flame of the ignited battery cell.

In addition, as the flame of the ignited battery cell is early extinguished to suppress the temperature rise of the ignited battery cell and the battery cells adjacent thereto, it is possible to secure the safety of the battery module.

Furthermore, as the heat sink is made of a composite material including a metal material, it is possible to improve heat dissipation properties.

In addition, compared to conventional heat sinks made of only resins, the heat dissipation case is made of a composite material including a resin material and a metal material, whereby it is possible to secure structural rigidity, and it is possible to promote the slimming of the heat sink.

### Description of Drawings

Figure 1 is a diagram for explaining chain ignition upon ignition of a battery cell in a battery module according to the conventional art.
Figure 2 is a perspective diagram of a state where a partial region of a battery module according to one example of the present invention has been cut.
Figure 3 is a cross-sectional diagram schematically showing a battery module according to one example of the present invention.
Figure 4 schematically illustrates a cross section of a composite material constituting a heat dissipation case.
Figure 5 schematically illustrates various examples of a heat dissipation case.
Figure 6 schematically illustrates a cross section of a heat dissipation film.
Figure 7 is a schematic cross-sectional diagram for explaining one coupling structure of an inflow port and a heat sink.
Figure 8 is schematic diagrams showing a sealing member.
Figure 9 is a schematic cross-sectional diagram for explaining a coupling structure of an inflow port and a heat sink.
Figure 10 is a diagram for explaining an operation in which cooling water is discharged from a heat sink upon inside ignition of a battery cell.

### Mode for Invention

Hereinafter, a battery module according to one example of the present invention will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

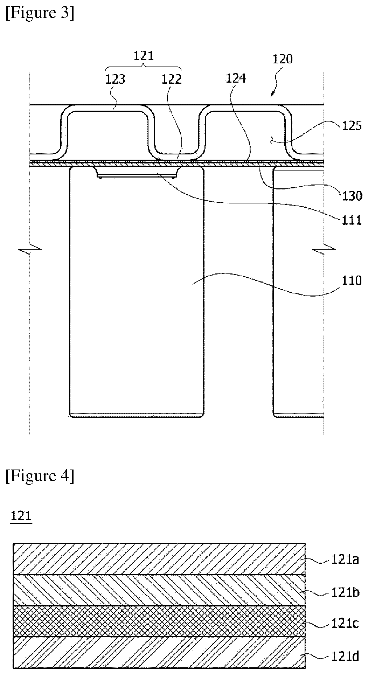

Figure 2 is a perspective diagram of a state where a partial region of a battery module according to one example of the present invention has been cut, and Figure 3 is a cross-sectional diagram schematically showing a battery module according to one example of the present invention.

Referring to Figure 2, a battery module (100) according to one example of the present invention comprises a plurality of battery cells (110) and a heat sink (120).

Upon inside ignition of the battery cell (110), the heat dissipation film (124) of the heat sink (120) is torn by the pressure to open the vent part (111) of the battery cell (110), and simultaneously cooling water flows down to the battery cell (110) through the torn portion of the heat dissipation film. As a result, it is for preventing the continuous ignition of the battery cell (110) by early extinguishing the flame of the ignited battery cell (110).

As one example, the battery cell (110) is a cylindrical battery cell (110), where an electrode assembly (positive electrode, negative electrode, separator, etc.) may be embedded therein. A vent part (111) is provided in the battery cell (110). Since the battery cell (110) is a well-known technology, the description thereof will be omitted in this example.

Referring to Figures 2 and 3, the heat sink (120) is coupled to the plurality of battery cells (110) so that a partial region of the vent part (111) in the battery cell (110) is positioned to be overlapped on the cooling flow path (125). In addition, the heat sink (120) may be coupled to the battery cell (110) by an adhesive (130).

At this time, the battery cell (110) is preferably coupled to the heat sink (120) such that an area located on a film coupling surface (122) is minimized. This is to allow the vent part (111) of the battery cell (110) to be opened more easily upon inside ignition of the battery cell (110).

The heat sink (120) may comprise a heat dissipation case (121), a heat dissipation film (124), an inflow port (128) and an outflow port (129). The heat sink (120) is coupled to the battery cell (110) to perform a function of dissipating heat from the battery cell (110).

The heat dissipation case (121) is combined with the heat dissipation film (124) to form a cooling flow path (125) through which cooling water flows. As one example, the heat dissipation case (121) is vacuum-molded so that the flow path groove (123) forming the cooling flow path (125) is provided.

The heat dissipation case (121) may comprise a film coupling surface (122), a flow path groove (123), an inflow opening (126) and an outflow opening (127).

The flow path groove (123) is provided stepwise with respect to the film coupling surface (122). The flow path groove (123) may be provided so that cooling water is flowable over the entire area of the heat dissipation case (121) in a zigzag shape. The flow path groove (123) guides the flow of cooling water from the inflow port (128) to the outflow port (129) along the longitudinal direction (L) of the heat dissipation case.

An inflow opening (126) and an outflow opening (127) are provided in the flow path groove (123). The inlet opening (126) may be provided at the front end (the upstream side when the cooling water flows) of the flow path groove (123), and the outflow opening (127) may be provided at the rear end (the downstream side when the cooling water flows) of the flow path groove (123) on the opposite side of the inflow opening (126).

In addition, the heat dissipation case (121) is made of a composite material including metal.

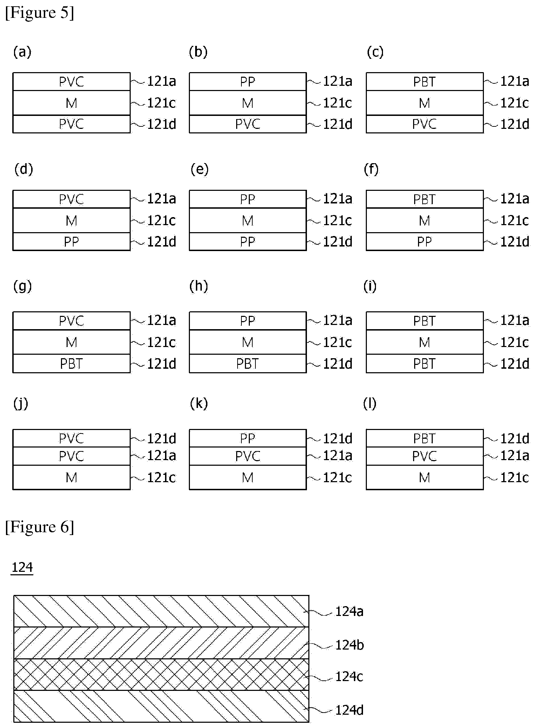

Figure 4 schematically illustrates a cross section of a composite material constituting a heat dissipation case, and Figure 5 schematically illustrates various examples of a heat dissipation case. Reference symbol M in Figure 5 shows a metal layer.

Referring to Figure 4, the composite material comprises a metal material, where the metal layer may be surface-treated with a resin material. As one example, the composite material comprises a metal layer (121c), a first resin layer (121a), and a second resin layer (121d).

The metal layer (121c) may comprise one or more selected from the group consisting of aluminum, stainless steel, or steel plate. In the metal layer (121c), at least one side of the metal layer (121c) is insulated by the resin layer (121a, 121d).

The first resin layer (121a) may be provided on one side of the metal layer (121c). As one example, the first resin layer (121a) may comprise one or more selected from the group consisting of a polyvinyl chloride (PVC)-based resin, a polypropylene (PP)-based resin, and a polybutyl terephthalate (PBT)-based resin. In addition, the first resin layer (121a) may be bonded to the metal layer (121c) by an adhesive (121b).

In addition, the resin layer (121a, 121d) may be formed in a multilayer structure in which two or more layers are laminated. As one example, the resin layer (121a, 121d) may be provided on one side of the metal layer as a double layer structure.

The resin layer (121a, 121d) may be provided on both sides of the metal layer (121c), respectively. Alternatively, the resin layer (121a, 121d) may be provided on any one side of the metal layer (121c) in a laminated form, that is, in a double layer form.

In this document, for convenience of description, the resin layer (121a, 121d) may be separately referred to as "a first resin layer (121a) and a second resin layer (121d)". The first resin layer (121a) and/or the second resin layer (121d) may each be bonded to the metal layer (121c) by an adhesive (121b).

The first resin layer (121a) and the second resin layer (121d) may be formed of the same or different resin materials. As one example, the first resin layer (121a) and the second resin layer (121d) may each comprise one or more selected from the group consisting of a PVC-based resin, a PP-based resin, and a PBT-based resin.

The PVC (polyvinyl chloride)-based resin is inexpensive. The PP (poly propylene)-based resin has excellent chemical resistance and balance. The PBT (polybutylene terephthalate)-based resin has excellent heat resistance. Depending on the intended use of the composite material, the types of resins are variable in various ways.

Referring to Figure 5, the first resin layer (121a) and the second resin layer (121d) may be provided on one side or both sides of the metal layer (121c) in various combinations.

The first resin layer (121a) may be a double layer in which one side is provided with any one of the PVC-based resin, PP-based resin, and PBT-based resin, and the other side is provided with another resin. For example, when the PVC-based resin constitutes one side of the first resin layer (121a) and the PP-based resin constitutes the other side of the first resin layer (121a), the molecular structure of the PVC-based resin and the molecular structure of the PP-based resin are different from each other, whereby the first resin layer (121a) can prevent pinholes.

The second resin layer (121d) may be provided on the other side of the metal layer (121c). The second resin layer (121d) comprises one or more selected from the group consisting of a PVC-based resin, a PP-based resin, and a PBT-based resin.

The second resin layer (121d) may have a double layer in which any one of the PVC-based resin, PP-based resin, and PBT-based resin constitutes one side and another resin constitutes the other side.

In such a structure, the heat dissipation case (121) may have structural rigidity and heat dissipation due to the metal layer (121c), and may secure insulation properties due to the first resin layer (121a) and the second resin layer (121d).

Figure 6 schematically illustrates a cross section of a heat dissipation film.

The heat dissipation film (124) is a thin film. The heat dissipation film (124) has a thickness ranging from 10µm to 990µm. The heat dissipation film (124) has heat dissipation and insulation properties.

The heat dissipation film (124) is provided to be torn by the force that upon inside ignition of the battery cell (110), the vent part (111) of the battery cell (110) is opened, and simultaneously the vent part (111) pushes up the heat dissipation film (124). Depending on the specification and size of the battery cell (110), the structure of the vent part (111), and the like, the pressure at which the vent part (111) is opened may be determined upon inside ignition. Similarly, when the vent part (111) is opened, the pressure applied to the heat dissipation film (124) may be measured or calculated. The heat dissipation film (124) may be provided to be damaged according to the pressure applied while the vent part (111) is opened, and to this end, the thickness, material, or physical properties, and the like of the heat dissipation film (124) may be adjusted.

As one example, the heat dissipation film (124) may be a film that a polymer resin film is compressed on a metal film. The metal film may comprise an aluminum film. Referring to Figure 6, the heat dissipation film (124) is a film that a polypropylene (PP) film (124a), an aluminum film (124b), a nylon film (124c), and a polyethylene terephthalate (PET) film (124d) are laminated and compressed.

The heat dissipation film (124) may be coupled to the film coupling surface (122) of the heat dissipation case (121) in a thermal compression method. The heat dissipation film (124) may be coupled to the film coupling surface (122) to cover the flow path groove (123), thereby forming a cooling flow path (125).

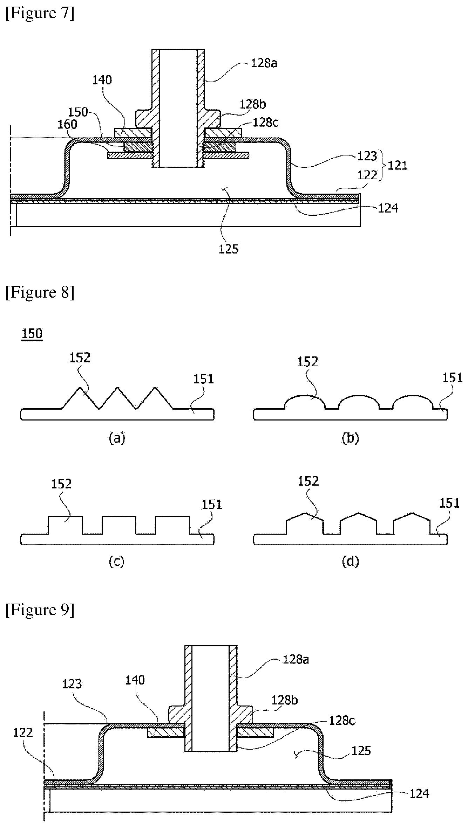

Figure 7 is a schematic cross-sectional diagram for explaining one coupling structure of an inflow port and a heat sink, Figure 8 is schematic diagrams showing a sealing member, and Figure 9 is a schematic cross-sectional diagram for explaining a coupling structure of an inflow port and a heat sink.

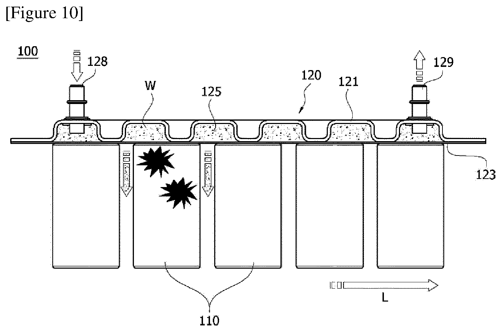

Also, Figure 10 is a diagram for explaining an operation in which cooling water is discharged from a heat sink upon inside ignition of a battery cell.

The inflow port (128) is a passage through which the cooling water (W) flows into the cooling flow path (125). The inflow port (128) is coupled to the heat dissipation case (121) so as to communicate with the flow path groove (123) by penetrating the inflow opening (126).

The outflow port (129) is a passage through which the cooling water (W) is discharged from the cooling flow path (125). The outflow port (129) is coupled to the heat dissipation case (121) so as to communicate with the flow path groove (123) by penetrating the outflow opening (127). The outflow port (129) is coupled to the heat dissipation case (121) on the side opposite to the inflow port (128) along the longitudinal direction (L) of the heat dissipation case (121).

The inflow port (128) and the outflow port (129) have the same structure. Accordingly, in this example, it will be described based on the inflow port (128).

The inflow port (128) comprises a port body (128a) and a port protrusion part (128b).

The port body (128a) has a form with a hollow inside. The port protrusion part (128b) is provided at the lower end (128c) of the port body. The port protrusion part (128b) is provided to protrude outward from the port body (128a). The port protrusion part (128b) may be integrally provided with the port body (128a).

The inflow port (128) may be coupled to the heat dissipation case so that the lower end (128c) of the port body is inserted into the flow path groove (123) by passing through the inflow opening (126), and the port protrusion part (128b) is caught on the outer surface of the heat dissipation case (121).

As one example, referring to Figure 7, the inflow port (128) may be coupled to the heat dissipation case (121) through a washer member (140), a sealing member (150), and a coupling member (160).

Also, the washer member (140) may be installed between the heat dissipation case (121) and the port protrusion part (128b) so that the port protrusion part (128b) is caught by penetrating the lower end (128c) of the port body.

In addition, the sealing member (150) may be coupled to the port body (128a) on the inside of the flow path groove (123) to penetrate the lower end (128c) of the pot body between the inner surface of the heat dissipation case (121) and the coupling member (160). The sealing member (150) performs a function of sealing a gap between the heat dissipation case (121) and the pot body (128a). The sealing member (150) may be made of a material having predetermined elasticity.

Referring to Figure 8, the sealing member (150) may have a plurality of sealing protrusions (152) protruding from the reference surface (151). The sealing protrusion (152) may have any one of a triangular section, a quadrangular section, a semicircular section, a loud section, or a sharp polygonal section.

Referring to Figure 7, the coupling member (160) penetrates the lower end (128c) of the port body on the inside of the flow path groove (123), but may be screw-coupled along a screw thread provided at the lower end (128c) of the port body.

Also, in a state where the washer member (140) is fitted to the lower end (128c) of the port body so as to be caught by the port protrusion part (128b), the inflow port (128) may be coupled so that the lower end (128c) of the port body penetrates the inflow opening (126), and thus the washer member (140) surrounds the inflow opening (126) on the outer circumferential surface of the heat dissipation case (121).

In addition, the sealing protrusion (152) of the sealing member (150) contacts the inner surface of the heat dissipation case (121), and the coupling member (160) is screw-coupled to the lower end (128c) of the port body while being in contact with the reference surface (151) of the sealing member (150), whereby the inflow port (128) may be coupled to the heat dissipation case (121) on the inside of the flow path groove (123).

As another example, referring to Figure 9, the port protrusion part (128b) may be coupled to the outer surface of the heat dissipation case (121) by thermal fusion. In addition, the lower end (128c) of the port body may be coupled to the inner surface of the heat dissipation case (121) by the washer member (140) on the inside of the flow path groove (123). The washer member (140) may be coupled to the inner surface of the heat dissipation case (121) by an adhesive by penetrating the lower end (128c) of the pot body.

Referring to Figure 10, the heat dissipation film (124) is torn by the force that upon inside ignition of the battery cell (110), the vent part (111) of the battery cell (110) is opened, and simultaneously the vent part (111) pushes up the heat dissipation film (124). At this time, the cooling water (W) flowing through the cooling flow path (125) flows down to the ignited battery cell (110).

Accordingly, the present invention can secure the safety of the battery module (100) by early extinguishing the flame of the ignited battery cell (110) to suppress the temperature rise of the ignited battery cell (110) and the adjacent battery cells (110).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery module in accordance with one example of the present invention, upon inside ignition of the battery cell, the heat dissipation film opposing the vent part of the battery cell is torn by the pressure that the vent part of the battery cell is opened, and simultaneously the cooling water flowing inside the heat sink flows down to the battery cell, whereby it is possible to early extinguish the flame of the ignited battery cell.

## Claims

1. A battery module (100) comprising: a plurality of battery cells (110) having vent parts (111); and
a heat sink (120) disposed to face the vent parts (111) and provided to dissipate heat from the plurality of battery cells (110), wherein
the heat sink (120) comprises a heat dissipation case (121) and a heat dissipation film (124), the heat dissipation case (121) has a metal material and a resinous material, the heat dissipation case (121) has a flow path groove (123) forming a cooling flow path (125) through which cooling water flows, the heat dissipation film (124) is coupled to the heat dissipation case (121) to surround the cooling flow path (125) and the heat dissipation film (124) is disposed to face the vent parts (111) and the heat dissipation film (124) is configured so that upon inside ignition of battery cell, the heat dissipation film (124) is torn by the pressure that opens the vent part (111) of the battery cell (110), and simultaneously the cooling water flowing inside the heat sink (120) flows down to the battery cell (110).

2. The battery module (100) according to claim 1, provided so that
upon inside ignition of the battery cell (110), the cooling water flowing through the cooling flow path (125) flows into the battery cell (110) while the heat dissipation film (124) facing the vent part (111) is damaged.

3. The battery module (100) according to claim 1, wherein
the heat dissipation case (121) comprises a metal layer (121c); and
a resin layer (121a, 121d) provided on one side of the metal layer (121c).

4. The battery module (100) according to claim 3, wherein
two or more layers of the resin layer (121a, 121d) are laminated, and
the respective layers (121a, 121d) are formed of the same or different resins.

5. The battery module (100) according to claim 3, wherein the resin layer (121a) comprises
a first resin layer (121a) provided on one side of the metal layer (121c) and a second resin layer (121d) provided on the other side of the metal layer (121c), and
the first resin layer (121a) and the second resin layer (121d) are formed of the same or different resin materials.

6. The battery module (100) according to claim 3, wherein the resin layer (121a, 121d) comprises
a first resin layer (121a) provided on one side of the metal layer (121c) and a second resin layer (121d) provided on the first resin layer (121a), and
the first resin layer (121a) and the second resin layer (121d) are formed of the same or different resin materials.

7. The battery module (100) according to claim 3, wherein
the metal layer (121c) comprises one or more selected from the group consisting of aluminum, stainless steel, and steel plate.

8. The battery module (100) according to claim 1, wherein
the heat sink (120) further comprises an inflow port (128) provided on one side of the flow path groove (123) and an outflow port (129) on the other side of the flow path groove (123).

9. The battery module (100) according to claim 8, wherein
the inflow port (128) and the outflow port (129) each have a port body (128a) with a hollow inside and a port protrusion part (128b) protruding outward from the port body (128a), and
the port body (128a) is inserted into the flow path groove (123), and the port protrusion part (128b) is supported on the heat dissipation case (121).

10. The battery module (100) according to claim 9, wherein
in the inflow port (128) and the outflow port (129), the port protrusion parts (128b) are each coupled to an outer circumferential surface of the heat dissipation case (121).

11. The battery module (100) according to claim 10, further comprising
a washer member (140) disposed between the port protrusion part (128b) and the heat dissipation case (121).

12. The battery module (100) according to claim 11, further comprising
a coupling member (160) screw-coupled to the port body (128a) inside the flow path groove (123), and a sealing member (150) disposed between the coupling member (160) and the heat dissipation case (121) inside the flow path groove (123).

13. The battery module according (100) to claim 12, wherein
the sealing member (150) has a plurality of sealing protrusions (152) arranged to contact the heat dissipation case (121).

14. The battery module (100) according to claim 1, wherein
the heat dissipation case (121) is vacuum-molded so that the flow path groove (123) is provided.

15. The battery module (100) according to claim 1, wherein
the heat dissipation film (124) has a thickness of 10µm to 300µm, and
the heat dissipation case (121) has a thickness of 0.3mm to 20mm.

16. The battery module (100) according to any one of claims 1 to 15,
the heat dissipation film (124) has a polymer resin film (124a, 124c, 124d) compressed on a metal film (124b).

## Patentansprüche

1. Batteriemodul (100), umfassend:
eine Mehrzahl von Batteriezellen (110), welche Entlüftungsteile (111) aufweisen; und
eine Wärmefalle (120), welche angeordnet ist, um den Entlüftungsteilen (111) zugewandt zu sein, und welche bereitgestellt ist, um Wärme von der Mehrzahl von Batteriezellen (110) abzuführen, wobei
die Wärmefalle (120) ein Wärmeabfuhrgehäuse (121) und eine Wärmeabfuhrfolie (124) umfasst, wobei das Wärmeabfuhrgehäuse (121) ein Metallmaterial und ein harzartiges Material aufweist, wobei das Wärmeabfuhrgehäuse (121) eine Strömungswegrille (123) aufweist, welche einen Kühlströmungsweg (125) bildet, durch welchen Kühlwasser strömt, wobei die Wärmeabfuhrfolie (124) mit dem Wärmeabfuhrgehäuse (121) gekoppelt ist, um den Kühlströmungsweg (125) zu umgeben, und die Wärmeabfuhrfolie (124) angeordnet ist, um den Entlüftungsteilen (111) zugewandt zu sein, und die Wärmeabfuhrfolie (124) derart eingerichtet ist, dass im Zuge einer Entzündung im Inneren einer Batteriezelle die Wärmeabfuhrfolie (124) durch den Druck zerrissen wird, welcher den Entlüftungsteil (111) der Batteriezelle (110) öffnet, und das Kühlwasser, welches in der Wärmefalle (120) strömt, gleichzeitig zu der Batteriezelle (110) runterströmt.

2. Batteriemodul (100) nach Anspruch 1, welches derart bereitgestellt ist, dass
im Zuge einer Entzündung der Batteriezelle (110), das Kühlwasser, welches durch den Kühlströmungsweg (125) strömt, in die Batteriezelle (110) strömt, während die Wärmeabfuhrfolie (124) beschädigt ist, welche dem Entlüftungsteil (111) zugewandt ist.

3. Batteriemodul (100) nach Anspruch 1, wobei
das Wärmeabfuhrgehäuse (121) eine Metallschicht (121c) umfasst; und
eine Harzschicht (121a, 121d) an einer Seite der Metallschicht (121c) bereitgestellt ist.

4. Batteriemodul (100) nach Anspruch 3, wobei
zwei oder mehr Schichten der Harzschicht (121a, 121d) laminiert sind, und
die jeweiligen Schichten (121a, 121d) aus dem gleichen oder unterschiedlichen Harzen gebildet sind.

5. Batteriemodul (100) nach Anspruch 3, wobei die Harzschicht (121a) umfasst:
eine erste Harzschicht (121a), welche an einer Seite der Metallschicht (121c) bereitgestellt ist, und eine zweite Harzschicht (121d), welche an der anderen Seite der Metallschicht (121c) bereitgestellt ist, und
wobei die erste Harzschicht (121a) und die zweite Harzschicht (121d) aus dem gleichen oder unterschiedlichen Harzmaterialien gebildet sind.

6. Batteriemodul (100) nach Anspruch 3, wobei die Harzschicht (121a, 121d) umfasst:
eine erste Harzschicht (121a), welche an einer Seite der Metallschicht (121c) bereitgestellt ist, und eine zweite Harzschicht (121d), welche an der ersten Harzschicht (121a) bereitgestellt ist, und
wobei die erste Harzschicht (121a) und die zweite Harzschicht (121d) aus dem gleichen oder unterschiedlichen Harzmaterialien gebildet sind.

7. Batteriemodul (100) nach Anspruch 3, wobei
die Metallschicht (121c) eines oder mehrere umfasst, ausgewählt aus der Gruppe, bestehend aus Aluminium, Edelstahl und einer Stahlplatte.

8. Batteriemodul (100) nach Anspruch 1, wobei
die Wärmefalle (120) ferner einen Zuflusskanal (128), welcher an einer Seite der Strömungswegrille (123) bereitgestellt ist, und einen Abflusskanal (129) umfasst, welcher an der anderen Seite der Strömungswegrille (123) ist.

9. Batteriemodul (100) nach Anspruch 8, wobei
der Zuflusskanal (128) und der Abflusskanal (129) jeweils einen Kanalkörper (128a) mit einem Hohlraum im Inneren und einen Kanalvorstandsteil (128b) aufweisen, welcher von dem Kanalkörper (128a) nach Außen hervorsteht, und
der Kanalkörper (128a) in die Strömungswegrille (123) eingeführt ist und der Kanalvorstandsteil (128b) an dem Wärmeabfuhrgehäuse (121) gehaltert ist.

10. Batteriemodul (100) nach Anspruch 9, wobei
in dem Zuflusskanal (128) und dem Abflusskanal (129), die Kanalvorstandsteile (128b) jeweils mit einer äußeren Umfangsfläche des Wärmeabführgehäuses (121) gekoppelt sind.

11. Batteriemodul (100) nach Anspruch 10, ferner umfassend
ein Dichtungselement (140), welches zwischen dem Kanalvorstandsteil (128b) und dem Wärmeabfuhrgehäuse (121) angeordnet ist.

12. Batteriemodul (100) nach Anspruch 11, ferner umfassend
ein Kopplungselement (160), welches mit dem Kanalkörper (128) im Inneren der Strömungswegrille (123) schraubengekoppelt ist, und ein Abdichtungselement (150), welches zwischen dem Kopplungselement (160) und dem Wärmeabfuhrgehäuse (121) im Inneren der Strömungswegrille (123) angeordnet ist.

13. Batteriemodul (100) nach Anspruch 12, wobei
das Abdichtungselement (150) eine Mehrzahl abdichtender Vorsprünge (152) aufweist, welche angeordnet sind, um das Wärmeabfuhrgehäuse (121) zu kontaktieren.

14. Batteriemodul (100) nach Anspruch 1, wobei
das Wärmeabfuhrgehäuse (121) vakuum-geformt ist, so dass die Strömungswegrille (123) bereitgestellt ist.

15. Batteriemodul (100) nach Anspruch 1, wobei
die Wärmeabfuhrfolie (124) eine Dicke von 10 µm bis 300 µm aufweist, und das Wärmeabfuhrgehäuse (121) eine Dicke von 0,3 mm bis 20 mm aufweist.

16. Batteriemodul (100) nach einem der Ansprüche 1 bis 15, wobei die Wärmeabfuhrfolie (124) eine Polymer-Harzfolie (124a, 124c, 124d) aufweist, welche auf einer Metallfolie (124b) komprimiert ist.

## Revendications

1. Module de batterie (100) comprenant : une pluralité de cellules de batterie (110) présentant des parties d'évent (111) ; et
un dissipateur thermique (120) disposé pour faire face aux parties d'évent (111) et prévu pour dissiper la chaleur provenant de la pluralité de cellules de batterie (110), dans lequel
le dissipateur thermique (120) comprend un boîtier de dissipation de chaleur (121) et un film de dissipation de chaleur (124), le boîtier de dissipation de chaleur (121) présente un matériau métallique et un matériau résineux, le boîtier de dissipation de chaleur (121) présente une rainure de trajet d'écoulement (123) formant un trajet d'écoulement de refroidissement (125) à travers lequel de l'eau de refroidissement s'écoule, le film de dissipation de chaleur (124) est couplé au boîtier de dissipation de chaleur (121) pour entourer le trajet d'écoulement de refroidissement (125) et le film de dissipation de chaleur (124) est disposé pour faire face aux parties d'évent (111) et le film de dissipation de chaleur (124) est configuré de sorte que, lors de la combustion interne de la cellule de batterie, le film de dissipation de chaleur (124) soit déchiré par la pression qui ouvre la partie d'évent (111) de la cellule de batterie (110), et simultanément l'eau de refroidissement s'écoulant à l'intérieur du dissipateur thermique (120) s'écoule vers le bas vers la cellule de batterie (110).

2. Module de batterie (100) selon la revendication 1, prévu de sorte que
lors de la combustion interne de la cellule de batterie (110), l'eau de refroidissement s'écoulant à travers le trajet d'écoulement de refroidissement (125) s'écoule dans la cellule de batterie (110) tandis que le film de dissipation de chaleur (124) orienté vers la partie d'évent (111) est endommagé.

3. Module de batterie (100) selon la revendication 1, dans lequel
le boîtier de dissipation de chaleur (121) comprend une couche métallique (121c) ; et une couche de résine (121a, 121d) prévue sur un côté de la couche métallique (121c).

4. Module de batterie (100) selon la revendication 3, dans lequel :
deux couches ou plus de la couche de résine (121a, 121d) sont stratifiées, et
les couches (121a, 121d) respectives sont formées de résines identiques ou différentes.

5. Module de batterie (100) selon la revendication 3, dans lequel la couche de résine (121a) comprend
une première couche de résine (121a) prévue sur un côté de la couche métallique (121c) et une deuxième couche de résine (121d) prévue sur l'autre côté de la couche métallique (121c), et
la première couche de résine (121a) et la deuxième couche de résine (121d) sont formées de matériaux de résine identiques ou différents.

6. Module de batterie (100) selon la revendication 3, dans lequel la couche de résine (121a, 121d) comprend :
une première couche de résine (121a) prévue sur un côté de la couche métallique (121c) et une deuxième couche de résine (121d) prévue sur la première couche de résine (121a), et
la première couche de résine (121a) et la deuxième couche de résine (121d) sont formées de matériaux de résine identiques ou différents.

7. Module de batterie (100) selon la revendication 3, dans lequel :
la couche métallique (121c) comprend un ou plusieurs métaux sélectionnés dans le groupe consistant en aluminium, acier inoxydable et plaque d'acier.

8. Module de batterie (100) selon la revendication 1, dans lequel
le dissipateur thermique (120) comprend en outre un orifice d'entrée (128) prévu d'un côté de la rainure de trajet d'écoulement (123) et un orifice de sortie (129) de l'autre côté de la rainure de trajet d'écoulement (123).

9. Module de batterie (100) selon la revendication 8, dans lequel :
l'orifice d'entrée (128) et l'orifice de sortie (129) présentent chacun un corps d'orifice (128a) avec un intérieur creux et une partie en saillie d'orifice (128b) faisant saillie vers l'extérieur à partir du corps d'orifice (128a), et
le corps d'orifice (128a) est inséré dans la rainure de trajet d'écoulement (123), et la partie en saillie d'orifice (128b) est supportée sur le boîtier de dissipation de chaleur (121).

10. Module de batterie (100) selon la revendication 9, dans lequel
dans l'orifice d'entrée (128) et l'orifice de sortie (129), les parties en saillie d'orifice (128b) sont chacune couplées à une surface circonférentielle extérieure du boîtier de dissipation de chaleur (121).

11. Module de batterie (100) selon la revendication 10, comprenant en outre un élément formant rondelle (140) disposé entre la partie en saillie d'orifice (128b) et le boîtier de dissipation de chaleur (121).

12. Module de batterie (100) selon la revendication 11, comprenant en outre
un organe de couplage (160) couplé par vissage au corps d'orifice (128a) à l'intérieur de la rainure de trajet d'écoulement (123), et un organe d'étanchéité (150) disposé entre l'organe de couplage (160) et le boîtier de dissipation de chaleur (121) à l'intérieur de la rainure de trajet d'écoulement (123).

13. Module de batterie (100) selon la revendication 12, dans lequel :
l'organe d'étanchéité (150) présente une pluralité de saillies d'étanchéité (152) agencées pour entrer en contact avec le boîtier de dissipation de chaleur (121).

14. Module de batterie (100) selon la revendication 1, dans lequel
le boîtier de dissipation de chaleur (121) est moulé sous vide de sorte que la rainure de trajet d'écoulement (123) soit prévue.

15. Module de batterie (100) selon la revendication 1, dans lequel
le film de dissipation de chaleur (124) a une épaisseur de 10 µm à 300 µm, et
le boîtier de dissipation de chaleur (121) a une épaisseur de 0,3 mm à 20 mm.

16. Module de batterie (100) selon l'une quelconque des revendications 1 à 15,
le film de dissipation de chaleur (124) présente un film de résine polymère (124a, 124c, 124d) comprimé sur un film métallique (124b).
